# EUROPEAN PATENT APPLICATION

(11) **EP 1 531 406 A2**
(43) Date of publication of application: **18.05.2005**
(21) Application number: 04257050.7
(22) Date of filing: 12.11.2004
(51) Int. Cl.: G06F 17/30

(54) **Information processing system**

(30) Priority: 14.11.2003 JP 2003384828
(71) Applicant: Ricoh Company, Tokyo 143-8555 (JP)
(72) Inventor: Takashima, Naoki c/o Ricoh Co Ltd, Tokyo 143-8555 (JP)
(74) Representative: Mounteney, Simon James

(57) **Abstract**

In an information processing system, when an input of setting to a search-portal setting screen is completed, a replica of a file specified is created in a monitor folder, data for a search corresponding table is created from setting conditions, and the search corresponding table is updated by writing the data therein. The monitor folder is constructed in a storage device of an information processor. The data file replicated in the monitor folder is stored in the information processor and a hard disk drive of an image processor.

## Description

### CROSS-REFERENCE TO RELATED APPLICATIONS

The present document incorporates by reference the entire contents of Japanese priority document, 2003-384828 filed in Japan on November 14, 2003.

### BACKGROUND OF THE INVENTION

### 1) Field of the Invention

The present invention relates to an information processing system and a computer product.

### 2) Description of the Related Art

Various techniques are available for searching and acquiring data from Web servers. For example, Japanese Patent Application Laid Open Publication No. 2001-306526 discloses a technology of this kind.

However, no conventional multifunction peripheral, which is copying machine with a network function, is known that manages searchable data. The reason is that, if the control of the multifunction peripheral and the control of a server opened to a network are integrated into one processing system, then the control becomes complicated and generally ends up in inefficient operation. Therefore, instead of managing information, such as scanned image data or a document received by a facsimile (hereinafter, "FAX document"), in the multifunction peripheral, the information is transmitted to a terminal on the network and is stored therein to allow searching.

### SUMMARY OF THE INVENTION

It is an object of the present invention to solve at least the problems in the conventional technology.

An information processing system according to an aspect of the present invention is connected to a network. The information processing system includes a memory that is accessible from other device on the network; and a replicating unit that makes a replica of a data file, which is to be shared with the other devices, in the memory.

A computer program according to another aspect of the present invention causes an information processing system execute making a replica of a data file, which is to be shared with other devices that are connected to the information processing system via a network, in a memory that is accessible from the other device.

A computer-readable recording medium according to still another aspect of the present invention stores the above computer program according to the present invention.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a system structure including a digital color multifunction peripheral according to an embodiment of the present invention;
Fig. 2 is an external perspective view of the digital color multifunction peripheral shown in Fig. 1;
Fig. 3 is a block diagram of the digital color multifunction peripheral in Fig. 1;
Fig. 4 is a plan view of an operation panel of the digital color multifunction peripheral shown in Fig. 1;
Fig. 5 is a block diagram of process modules operating in the digital color multifunction peripheral shown in Fig. 1;
Fig. 6 is an example of a search-portal setting screen;
Fig. 7 is a diagram of a selection screen;
Fig. 8 is another example of a search-portal setting screen;
Fig. 9 is a diagram for explaining a search corresponding table;
Fig. 10 is a flowchart of processes executed by the digital color multifunction peripheral;
Fig. 11 is an example of a search-portal input form screen;
Fig. 12 is an example of a HyperText Markup Language (HTML) document;
Fig. 13 is a diagram for explaining an example of data input through the search-portal input form screen transmitted from a Web browser;
Fig. 14 is a flowchart of processes executed by the digital color multifunction peripheral;
Fig. 15 is another example of a HyperText Markup Language (HTML) document; and
Fig. 16 is example of a search result screen.

### DETAILED DESCRIPTION

Exemplary embodiments of an information processing system and a computer product according to the present invention are explained in detail below with reference to the accompanying drawings.

In an embodiment, an example of adapting the present invention in a digital color multifunction peripheral (hereinafter, "MFP") is explained. The MFP performs various functions including a copying function, a facsimile (FAX) function, a print function, a scanner function, and a function of distributing data. The data is, for example, image data of documents read by the scanner function or image data input to the printer function or the FAX function.

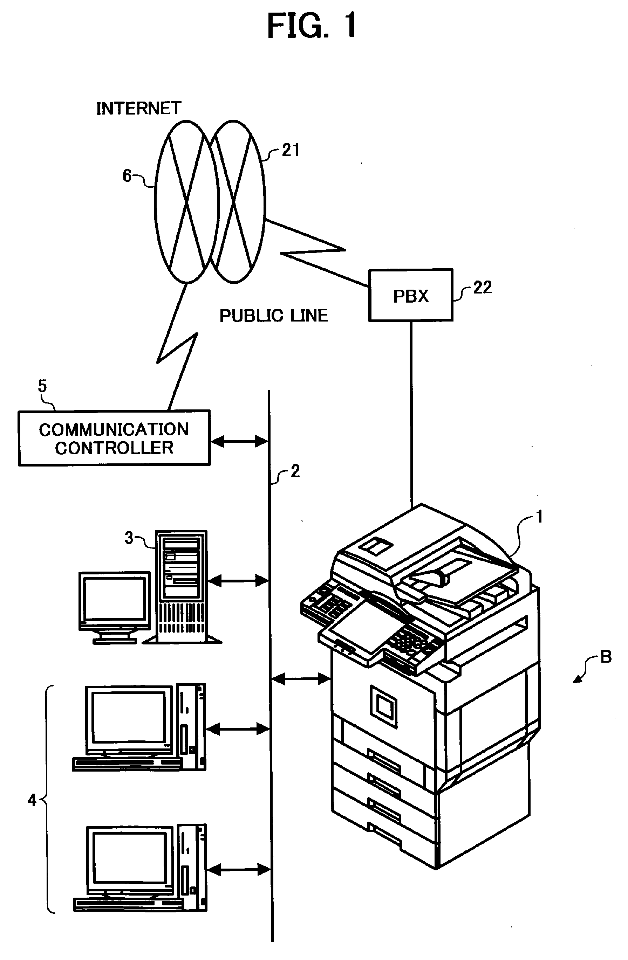

Fig. 1 is a system structure that includes an MFP 1 according to an embodiment of the present invention. In this system, the MFP 1, which is an information processing system, is connected with a server computer 3 and a plurality of client computers 4 through a Local Area Network (LAN) 2. The server computer 3 executes various information processing. The server computer 3 supports, for example, a File Transfer Protocol (FTP) and a HyperText Transfer Protocol (HTTP), and realizes functions of Web server and a Domain Name Server (DNS). In other words, image processing functions such as an image input function (scanner function), an image output function (print function), and an image storage function can be shared over the LAN 2.

This system is connected to an Internet network 6 through a communication controller 5 to be constructed so that data communication can be performed with an external environment through the Internet network 6. Although a router, a switching device, a modem, or a Digital Subscriber Line (DSL) modem is generally used for the communication controller 5, any device may be used if communication based on Transmission Control Protocol/Internet Protocol (TCP/IP) is possible at minimum. The LAN 2 is not limited to wire communication, and a wireless communication system (infrared rays and radio waves) may be used. Alternatively, a communication system using an optical fiber may be used.

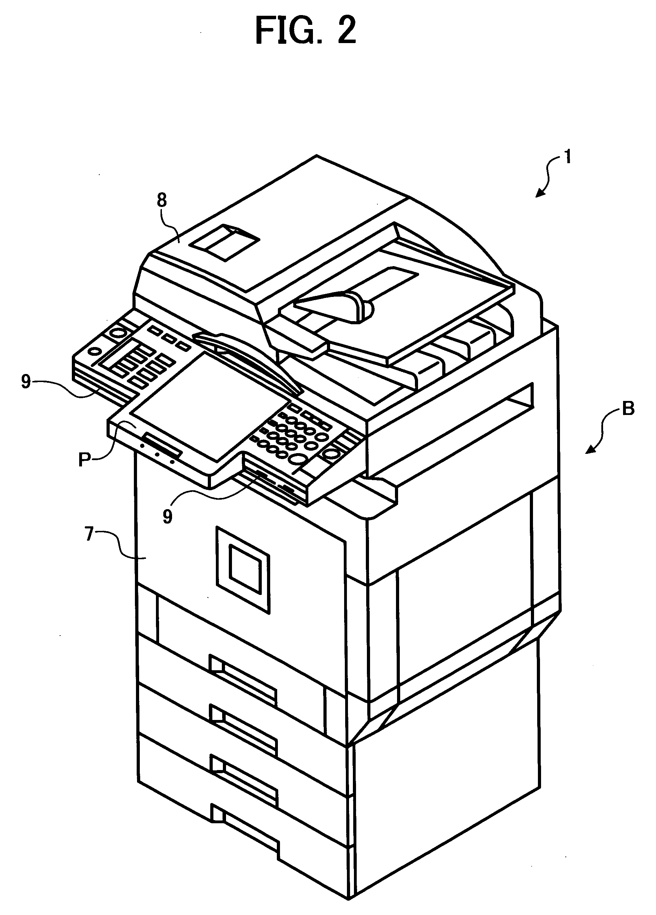

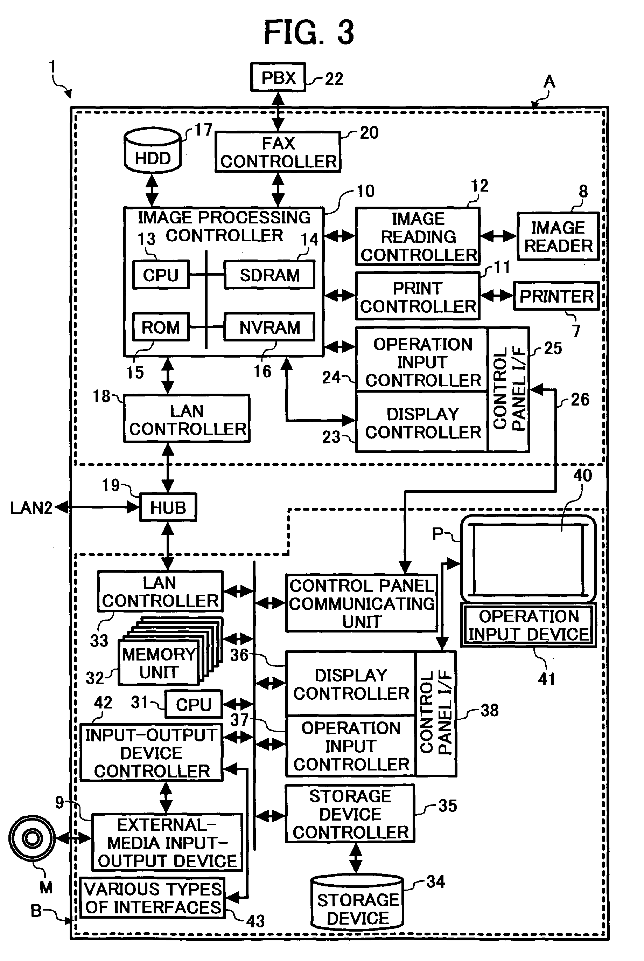

Fig. 2 is an external perspective view of the MFP 1. Fig. 3 is a block diagram of the MFP 1. As shown in Fig. 2, the MFP 1 includes an image reader 8 that reads an image from a document, and a printer 7. The image reader 8 is disposed above the printer 7 that forms an image on a medium such as a transfer paper. An operation panel P is provided on the outer surface of the image reader 8. The operation panel P includes a display provided for an operator and allows various inputs such as settings of functions from the operator. Furthermore, an external-media input-output device 9 is provided below the operation panel P so that a slot allowing insertion of a recording medium M is exposed to the outside. More specifically, the external-media input-output device 9 is a device that reads a program code stored in a recording medium M (see Fig. 3) such as an optical disk and a flexible disk and also reads image data, and so on, or that writes a program code, image data, and so on.

As shown in Fig. 3, the structure of the MFP 1 is roughly divided into an image processor A and an information processor B. The printer 7 and the image reader 8 belong to the image processor A, and the operation panel P and the external-media input-output device 9 belong to the information processor B that is a computer for performing various information processing.

The image processor A is explained below. The image processor A including the printer 7 and the image reader 8 has an image processing controller 10 that controls overall image processing in the image processor A. The image processing controller 10 is connected with a print controller 11 that controls the printer 7, and an image reading controller 12 that controls the image reader 8.

The print controller 11 outputs a print instruction including image data to the printer 7 under the control of the image processing controller 10, and causes the printer 7 to form an image on a medium such as a transfer paper and output the medium with the image. The printer 7 is capable of full-color printing, and employs any one of printing methods or systems such as an electrophotographic method, an ink jet system, a dye sublimation thermal transfer system, a silver salt photographing method, a direct thermal recording method, and a dye diffusion thermal transfer system.

The image reading controller 12 drives the image reader 8 under the control of the image processing controller 10 to cause the image reader 8 to collect light illuminated by a lamp and reflected from the surface of a document to a light receiving element (e.g., charge-coupled device (CCD)) by a mirror and a lens. The image reader 8 then reads the document to obtain data, and performs analog-to-digital (A-D) conversion on the data to generate 8-bit digital image data for colors as red (R), green (G), and blue (B).

The image processing controller 10 is a microcomputer in which a Central Processing Unit (CPU) 13 as a main processor communicates with a Synchronous Dynamic Random Access Memory (SDRAM) 14, a Read Only Memory (ROM) 15, and a Nonvolatile Random Access Memory (NVRAM) 16 through a bus. The SDRAM 14 temporarily stores image data read-in from the image reader 8 to be supplied to the printer 7 for imaging. The ROM 15 stores a control program and the like, and the NVRAM 16 records system information such as log/system settings/log information so that the information can be retained even after the power is off.

The image processing controller 10 is connected with a Hard Disk Drive (HDD) 17 that accumulates a large amount of image data and serves as a storage unit that stores job histories or the like, a LAN controller 18 that connects the image processor A to the LAN 2 through a hub 19 that is a line concentrator provided in the MFP 1. The image processing controller 10 is also connected with a FAX controller 20 that controls the facsimile. The FAX controller 20 is connected to a private branch exchange (PBX) 22 communicating with a public telephone network 21, which allows the MFP 1 to communicate with a remote facsimile.

The image processing controller 10 is further connected with a display controller 23 and an operation input controller 24. The display controller 23 outputs an image-display control signal to the information processor B through a communication cable 26 connected to a control panel interface (I/F) 25 under the control of the image processing controller 10, and controls an operation panel P of the information processor B so as to perform image display. The operation input controller 24 receives an input control signal through the communication cable 26 connected to the control panel I/F 25. The input control signal according to setting of a function or input operation by an operator is input through the operation panel P of the information processor B, and the operation is performed under the control of the image processing controller 10. In other words, the image processor A can directly monitor the operation panel P of the information processor B through the communication cable 26.

Therefore, the image processor A accesses the operation panel P of the information processor B by connecting the communication cable 26 to an image processor included in a conventional image processing apparatus. In other words, the display controller 23 and the operation input controller 24 of the image processor A operate as if they are directly connected to the operation panel P.

Based on the configuration, the image processor A analyzes print data that is image information and a command to instruct printing received from an external device such as the server computer 3, a client computer 4, or a facsimile. The image processor A then bitmaps the print data so as to be printed as output image data, and analyzes print mode from the command to decide an operation. The image processor A receives the print data and the command through the LAN controller 18 or the FAX controller 20 and operates.

The image processor A can transmit print data and data for a document read-in which are stored in the SDRAM 14 and the HDD 17, and output image data obtained by processing these data for output, and compressed data obtained by compressing the output image data, to the external device such as the server computer 3, the client computer 4, or a facsimile.

Furthermore, the image processor A transmits the image data read by the image reader 8 to the image processing controller 10, corrects signal degradation due to quantization of the image data read to optical and digital signals, and writes the image data to the SDRAM 14. The image data stored in the SDRAM 14 in the above manner is converted to output image data in the print controller 11, and the output image data is output to the printer 7.

The information processor B including the operation panel P is explained below. The information processor B is a microcomputer controlled by a general-purpose operating system (OS) used generally in an information processor such as a personal computer (PC). The information processor B has a CPU 31 that is a main processor. The CPU 31 communicates with a memory unit 32 and a storage device controller 35 through a bus. The memory unit 32 includes RAM that serves as a working area of the CPU 31, and ROM as a read only memory that stores a boot program or the like. The storage device controller 35 controls an input and an output of data in and from a storage device 34 such as a HDD that stores OS and application programs.

The CPU 31 further communicates with a LAN controller 33 that is a communication interface for connecting the information processor B to the LAN 2 through the hub 19. An Internet Protocol (IP) address that is a network address allocated to the LAN controller 33 is different from an IP address allocated to the LAN controller 18 of the image processor A. In other words, two IP addresses are allocated to the MFP 1 according to the embodiment of the present invention. In short, the image processor A and the information processor B are connected to the LAN 2, which allows data exchange between the two processors.

Because the MFP 1 is connected to the LAN 2 through the hub 19, it seems that only one IP address is allocated to the MFP 1. Therefore, it becomes easy to handle the connection and the like without uglifying the MFP 1.

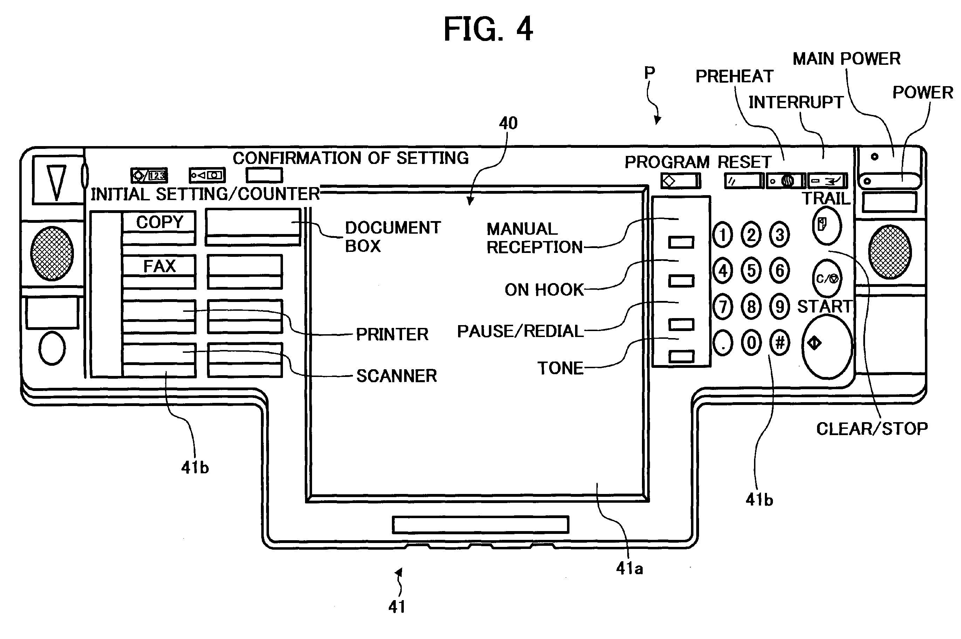

The CPU 31 also communicates with a display controller 36 and an operation input controller 37 both of which control the operation panel P. Fig. 4 is a plan view of the operation panel P. The operation panel P includes a display device 40 that is, for example, a Liquid Crystal Display (LCD), and an operation input device 41. The operation input device 41 includes a touch panel 41a that is an ultrasonic elastic wave type and is layered on the surface of the display device 40, and a keyboard 41b that has a plurality of keys. The keyboard 41b includes a start key for declaring the start of image reading, a tendigit keypad for inputting numeric values, a read-condition setting key for setting a transmission target of the image read-in, and a clear key. In other words, the display controller 36 outputs an image-display control signal to the display device 40 through a control panel I/F 38, and causes the display device 40 to display a predetermined item according to the image-display control signal. The operation input controller 37 receives an input control signal corresponding to setting of a function or an input operation by the operator using the operation input device 41 through the control panel I/F 38.

The CPU 31 further communicates with a control panel communicating unit 39 connected to the control panel I/F 25 of the image processor A through the communication cable 26. The control panel communicating unit 39 receives the image-display control signal output from the image processor A, and transmits an input control signal corresponding to setting of a function or an input operation by the operator through the operation panel P, to the image processor A. Although the details are explained later, the image-display control signal from the image processor A received by the control panel communicating unit 39 is subjected to data conversion for the display device 40 of the operation panel P, and the data converted is output to the display controller 36. The input control signal operated by the operator through the operation panel P is subjected to data conversion to a format according to specifications of the image processor A, and the data converted is input into the control panel communicating unit 39.

As explained above, the storage device 34 stores the OS and application programs executed by the CPU 31. In this meaning, the storage device 34 functions as a storage medium that stores the application programs. In the MFP 1, upon turning on power by a user, the CPU 31 starts the boot program in the memory unit 32, and loads the OS from the storage device 34 to the RAM of the memory unit 32 to start up the OS. The OS starts a program, reads information, or stores information according to the operation by the user. "Windows" (TM, hereinafter the same) is known as typical one of OSs. An operation program running on these OSs is referred to as an application program. The OS for the information processor B is the same type as that for the information processor (the server computer 3 or the client computer 4), that is, a general-purpose OS (e.g., Windows).

As explained above, the MFP 1 includes the external-media input-output device 9 such as a flexible disk drive, an optical disk drive, a magneto-optical disk (MO) drive, and a media drive. The external-media input-output device 9 is a device that reads or writes program code and image data from or in a storage medium M that stores OS, device drivers, various program codes (control programs) such as various application programs, and the image data. The storage medium M includes a flexible disk, a hard disk, an optical disk (compact disk (CD)-ROM, CD-recordable (R), CD-rewritable (RW), digital versatile disk (DVD)-ROM, DVD-RAM, DVD-R, DVD+R, DVD-RW, and DVD+RW), an magneto-optical disk (MO), and a semiconductor media. The external-media input-output device 9 is controlled by an input-output device controller 42 that communicates with the CPU 31 through the bus.

Therefore, the application programs stored in the storage device 34 may be obtained by installing the application programs stored in the storage medium M. Accordingly, the storage medium M is also possible to function as a storage medium that stores the application programs. Furthermore, the application programs may be loaded from the outside through the Internet network 6 and the LAN 2 to be installed in the storage device 34.

The input-output device controller 42 is also connected with various types of interfaces 43 such as a universal serial bus (USB), IEEE 1394, and a small computer system interface (SCSI), which allows various types of equipment (e.g., a digital camera) to be connected to the input-output device controller 42 through the interfaces 43.

The MFP 1 includes a plurality of devices that perform mutually different processes. In this example, the image processor A and the information processor B can perform processes independently. Therefore, it is possible to perform concurrent operations such that the image processor A reads an image while the information processor B receives an electronic mail. In the example, since the results of the respective processes are not mutually influenced over each other, no problem occurs if the image processor A and the information processor B operate independently.

Aside from the independent operation, the MFP 1 can use the functions of the image processor A using a program that operates in the information processor B, and decides the result as a target to be processed.

For example, there is a case of performing such a process that image data for an image document read by the image reader 8 of the image processor A is processed by predetermined character recognition software to acquire a text document. In order to perform the process, a conventional multifunction peripheral
(1) transmits data as a target to be processed to an external computer (such as PC) with the character recognition software mounted thereon, and the data is processed by the external computer, or (2) requires that the image processor A prepares character recognition software that operates in the image processing controller 10.

There are some problems in the above cases. In the case of (1), the external computer has to be always prepared so as to process the data when it is necessary. In the case of (2), when the software operating in the image processor A is prepared, (A) the operation of general-purpose application software in a system that specializes in image processing causes the throughput originally obtained in the multifunction peripheral to be reduced. (B) Almost all of commercially available software such as word processor and speech recognition does not operate in the system specializing in the image processing because of the difference between the operating systems. Therefore, it is necessary to specially develop the software.

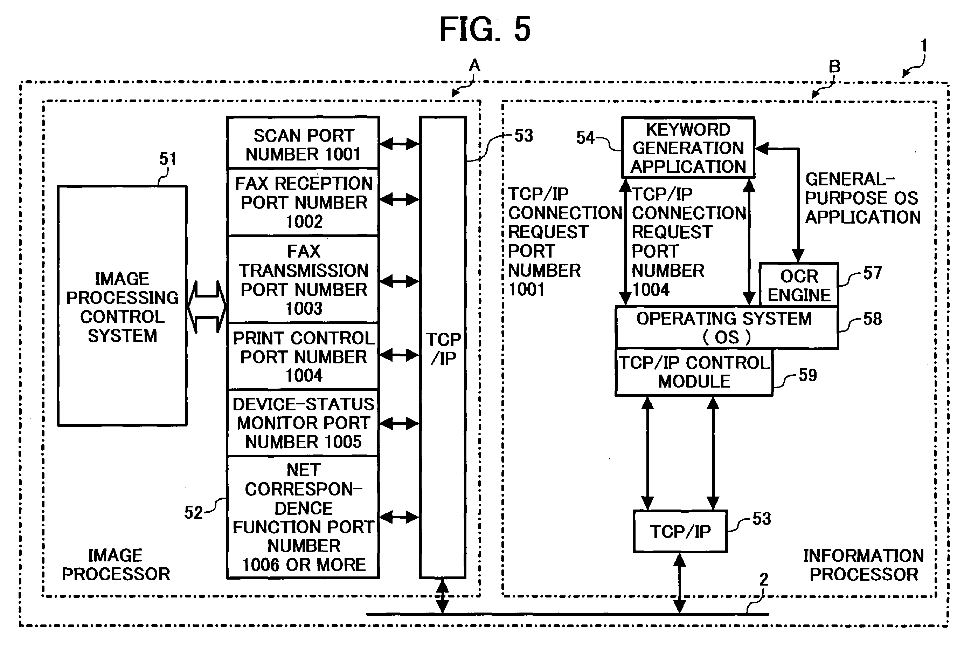

On the contrary, in the MFP 1, the information processor B operates a general-purpose operating system 58 that is commercially available (see Fig. 5. e.g., Windows), which is not affected by the operation of the image processor A, and therefore, the problems of (1) and (2) do not occur. However, if the two always independently operate, it is not possible to accomplish the purpose of using the functions of the image processor A by using the program of the information processor B and deciding the result of using them as a target to be processed. In the MFP 1, by operating a program obtained by combining process modules as shown in Fig. 5, the functions of the image processor A can be used.

The process modules of Fig. 5 are explained below. Modules of an image processing control system 51 are comprised of programs for performing controls under which the MFP 1 executes original functions. The MFP 1 includes an interface with a net correspondence functional module 52 that is accessible only from the information processor B through a network (LAN 2).

The net correspondence functional module 52 allows the use of functions (executed in the image processing control system 51) as standard such as a scan function and a FAX-receiving function included in the multifunction peripheral, through the network (LAN 2). Therefore, the net correspondence functional module 52 cannot be accessed even from the image processor A. In the net correspondence functional module 52, when TCP/IP 53 for always monitoring accesses through the network detects a connection request to a corresponding port number, a process module of a corresponding function is activated. For example, when a connection request to a port number 1002 is received, a module of the FAX-receiving function is activated. The module activated operates according to the process request from a connection request source, and sends back a necessary response.

Characteristics of the programs in the information processor B are explained below. A keyword generation application 54 is explained as an example. The keyword generation application 54 performs character recognition on image data read-in and generates a keyword from the result of character recognition. In the overall information processor B, the applications operate under the control of an operating system 58. The applications can use functions provided by the operating system 58. In other words, in the program for executing an application, the function is used by being called as a module that is a component of the software to cause the module to perform required process. ATCP/IP control module 59 is exemplified as this case. This module executes the function that the operating system 58 has as standard for performing communications with another terminal unit that is connected thereto by the TCP/IP 53.

It is also possible to use separate software mounted to be used for another application. For example, an optical character reader (OCR) engine 57 performs only character recognition on the image data. More specifically, the OCR engine 57 operates not singly but is used as a component (module) of another software.

As explained above, the applications can be made to operate under the control of the operating system 58 in the overall information processor B. Therefore, it is possible to develop an application that includes one of these functions singly or some of these functions combined.

However, the function of the image processor A cannot directly be used by the existing technology. The MFP 1 has the image processor A that is provided to realize the original functions of the multifunction peripheral and the information processor B that is provided to execute application software. Both are connected to each other through the network (LAN 2) based on a network protocol (TCP/IP 53) inside the MFP 1. However, this connection means that only physical connection is possible and data communication can be therefore mutually performed, but this does not allow the function of the image processor A to be used from the inside of the application software that operates in the information processor B.

A unit for using the function of the image processor A from the inside of the application software that operates in the information processor B is explained below.

In the keyword generation application 54, image data that is a target for character recognition is the image data read-in from the image reader 8 controlled by the image processor A. In order to instruct the operation of reading an image to the image reader 8, a port number 1001 is specified, and a TCP/IP connection request is issued to the image processor A. At this time, data indicating the content of the process is also transmitted as a data stream. The function specified by the port number 1001 is such that the image reader 8 reads an image, adds an arbitrary file name to the image read-in, and transmits the image data to the information processor B. The contents of the processes are preset and port numbers are allocated to the functions to individually use any one of them. In such a manner, the functions of the image processor A can be used from the keyword generation application 54. The computer protocol is not limited to TCP/IP, and therefore, any method may be used.

A function of loading a data file to a monitor folder is explained below.

This function is executed by a program operating in the information processor B. The monitor folder is a data storage area provided in the storage device 34 of the information processor B to enable searching of internal data of the MFP 1 from the client computer 4 connected to the MFP 1 through the network (LAN 2) as shown in Fig. 1.

In the MFP 1, the data storage area serves also as a data storage area managed by a File Transfer Protocol (FTP) server (server computer 3). Therefore, the data stored in the monitor folder is caused to be downloaded into the client computer 4 externally provided by file, using the FTP.

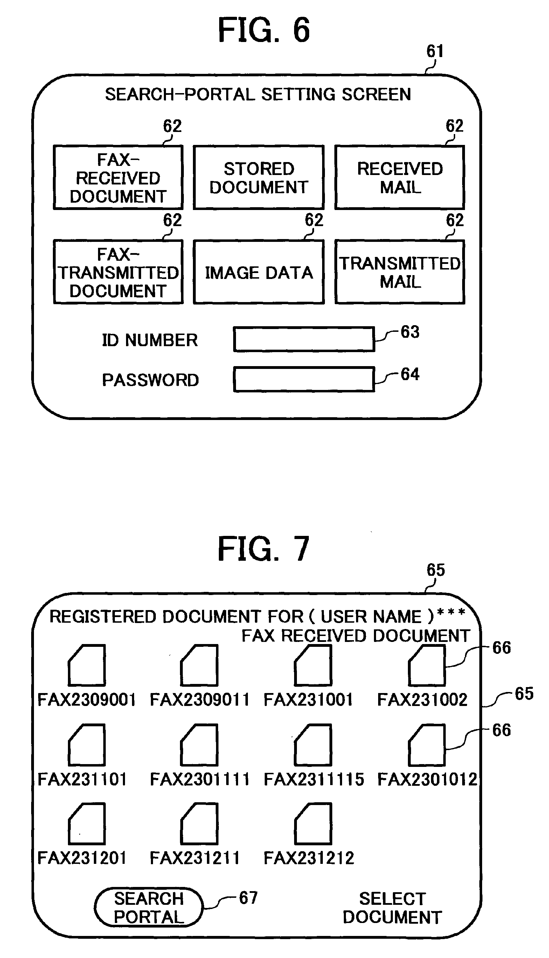

The operation of storing the data in the monitor folder and allowing the data to be searched from the outside is explained below. The user selects a type of data stored therein in a search-portal setting screen 61 (Fig. 6) displayed on the operation panel P. The user selects the type of data desired by touching a button 62 on the screen 61 with a pointing device or with a fingertip if the operation panel P is a touch panel. If the access is allowed only to personal data in order to enhance the security, personal information is input into an identification (ID)-number input field 63 and a password input field 64 through the operation input device 41. The types of data displayed in Fig. 6 are only examples of the data stored in the MFP 1, and therefore, no restriction is provided to classify the data.

As shown in Fig. 6, any one of buttons 62 for FAX-received documents, FAX-transmitted documents, stored documents, image data, received mails, and transmitted mails is selectable. The FAX-received documents, the FAX-transmitted documents, and the stored documents are stored in the HDD 17 of the image processor A. The received mails and the transmitted mails are stored in the storage device 34 of the information processor B. Why the storage locations are different is because pieces of data are processed in different units. For example, when the button 62 for the FAX-received documents is selected, the process is performed in the information processor B, and as a result, the display of the screen is switched to a selection screen 65 of Fig. 7. At this time, when the ID number and the password are input as personal identification information, the data related to the personal identification information is selected. For example, security management such that disclosure is permitted only to the personal information input can be introduced into the system.

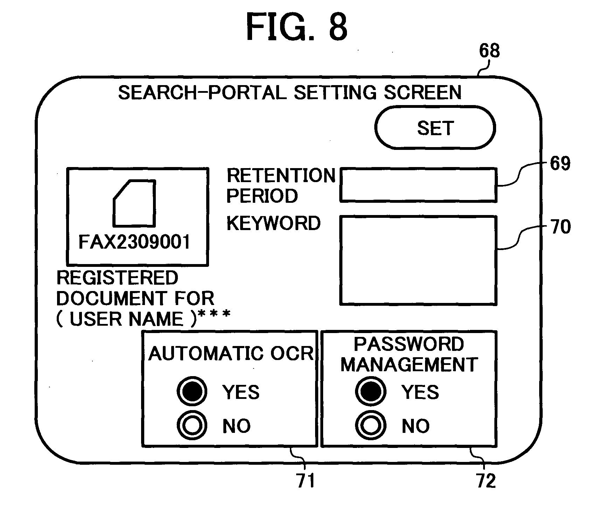

The selection screen 65 of Fig. 7 displays file names 66 of data that is coincident with the condition selected or set in Fig. 6. Here, a document (file name) to be registered into the monitor folder for search can be selected. The user can input a condition to be registered through operation of a search portal button 67. More specifically, when the search portal button 67 is operated, the screen is switched to a search-portal setting screen 68 as shown in Fig. 8. Herein, settings can be input using a retention-period input field 69, a keyword input field 70, a selection box 71 for an automatic OCR function, and a selection box 72 for specifying "password management". If the automatic OCR function is selected, the document data selected is automatically subjected to OCR (character recognition), and the result of the operation can be registered as a keyword.

When these operations are finished, the program in the information processor B creates a replica of the file specified, in the storage device 34 of the information processor B. The program also imports the data stored in the image processor A through the LAN controller 33 and creates a replica in the storage device 34. The function of importing the data file through the LAN controller 33 can be performed by using a function prepared as one of the net correspondence functional module 52.

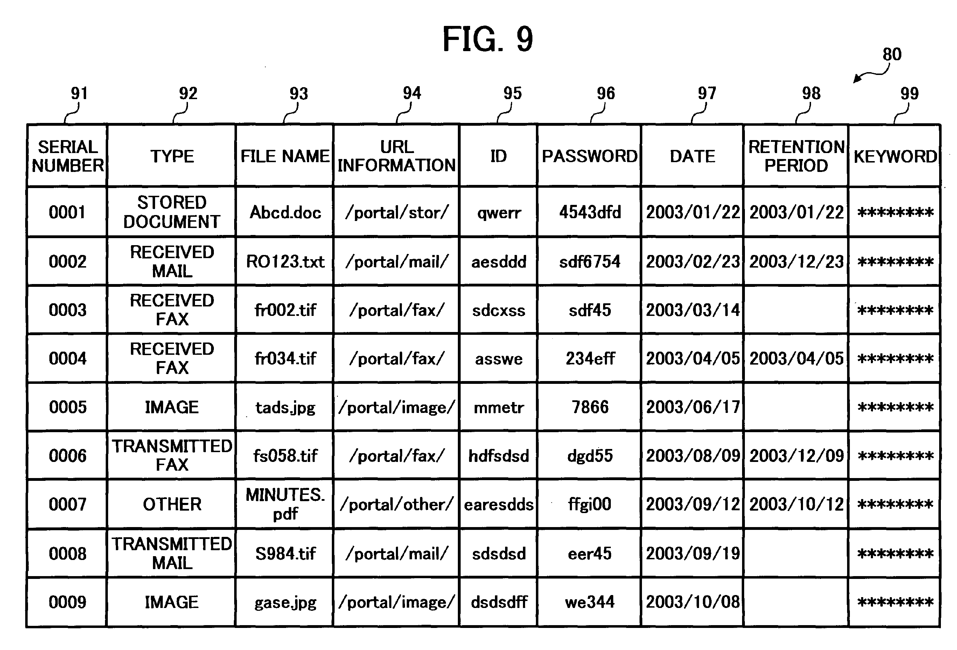

The program creates a search corresponding table 80 as shown in Fig. 9 in the storage device 34 and ends the operation. The search corresponding table 80 is a table that stores information for the data file replicated in the monitor folder. When the data file is replicated in the monitor folder, the contents of the search corresponding table 80 are updated.

The contents registered into the search corresponding table 80 include "serial number" 91 of data files replicated in the monitor folder, a "type" (classification of documents) 92, "file name" 93, "URL" 94 (actual storage location in the monitor folder). The contents registered as shown in Fig. 9 represent an example, and therefore, management information to be stored in the search corresponding table 80 may be freely decided. In the example of Fig. 9, the content of the serial number 004 indicates "received FAX" as the type 92, which indicates that a FAX document received is stored in the search corresponding table 80. The file name 93 is recognized as "tr034.tif'. The URL 94 represents a location of the monitor folder managed by a FTP server program, where the replica of a file is actually created. The replica is stored in a low-order folder name "fax" of the monitor folder. If "ID" 95 and "password" 96 are registered, the contents thereof are stored in the search corresponding table 80. "Date" 97 is a date when data is registered into the search corresponding table 80. "Retention period" 98 indicates a retention final date as a retention period. When the retention period passes, the data file replicated and the corresponding data in the search corresponding table 80 are deleted (deleting unit). "Keyword" 99 is also registered thereinto. The keyword 99 can be set by directly inputting it through the search-portal setting screen 68 of Fig. 8 or by registering a text obtained by automatically performing OCR processing thereon. The contents registered to include information that the user can set and information that is automatically set.

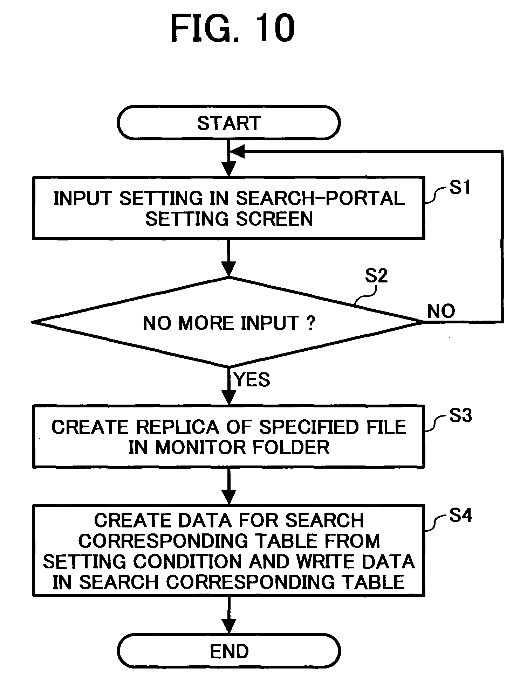

Fig. 10 is a flowchart for schematically explaining the function of capturing an image into the monitor folder that has been explained so far. At step S1 to step S4, a series of processes are explained. More specifically, when completing the input of setting in the search-portal setting screen 61 (steps S1 and S2, Yes (Y)), the CPU 31 creates the replica of a file specified in the monitor folder (replicating unit) (step S3), creates data for the search corresponding table 80 from the setting condition, and writes the data to update the search corresponding table 80 (registering unit) (step S4).

A Web search function is explained below.

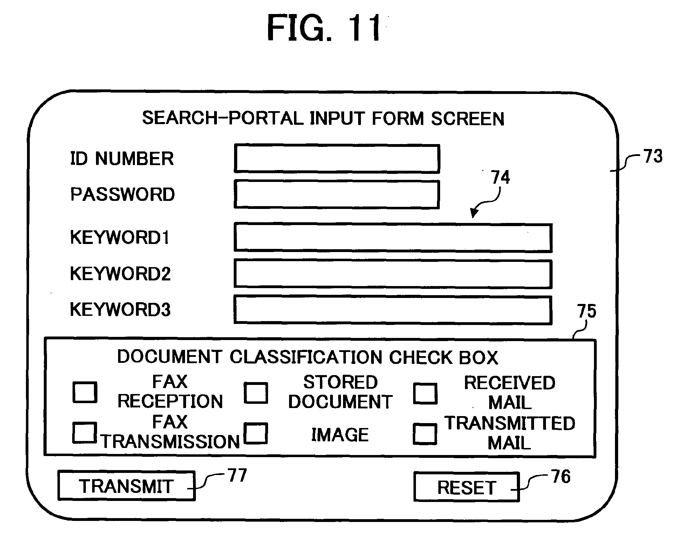

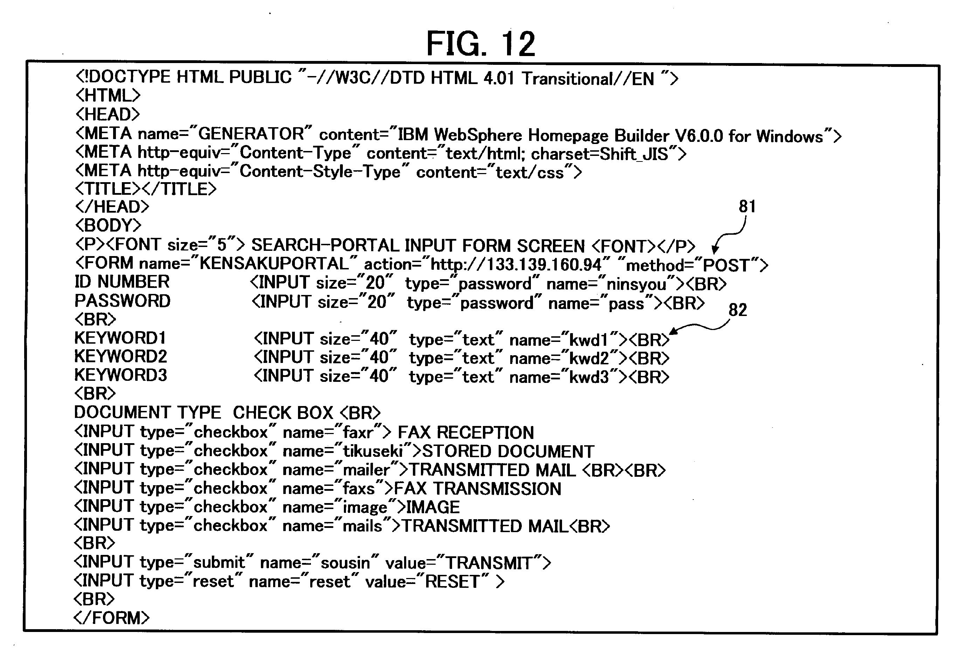

Information in the MFP 1 is searchable from the client computer 4 on the LAN 2 or the like as shown in Fig. 1. A search-portal input form screen 73 as shown in Fig. 11 is displayed on the display of the client computer 4. The user inputs necessary pieces of information in input fields 74 and 75 and operates a "transmit" button 77 of the search-portal input form screen 73. The necessary pieces of information include the ID number, the password, the keyword, and the document type. These pieces of information are simply examples, and therefore, it is possible to set so that another search condition is selectable. The search-portal input form screen 73 is a screen of Web browser in an actual case, the contents as an example of Fig. 11 displays the contents of an HTML document as shown in Fig. 12.

The HTML document of Fig. 12 may be previously stored in the client computer 4. The URL (http://133.139.160.94/index.html) may be directly input from the Web browser to send a connection request to the MFP 1 and the HTML document may be transmitted from the MFP 1. Alternatively, it may be acquired through any other routes.

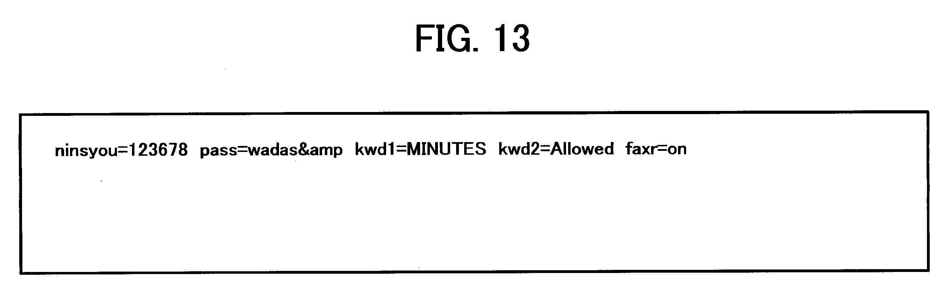

Input of setting of the search condition is completed, and then the transmit button 77 is operated to start searching. When the transmit button 77 is operated, the Web browser displaying the HTML document sends the connection request to the URL address "http://133.139.160.94" specified by a form definition statement "action" indicated by reference sign 81 of Fig. 12, through the TCP/IP 53. This address is the IP address of the MFP 1. If a response to the connection request comes back, the data input through the search-portal input form screen 73 is transmitted from the Web browser. For example, as shown in Fig. 13, the name input in the input field corresponds to the data input. Herein, "kwd1=Minutes" indicates that "Minutes" has been input into the field specified by the form definition statement as shown by reference sign 82 of Fig. 12.

The processes of the MFP 1 to which the connection request is sent are explained below.

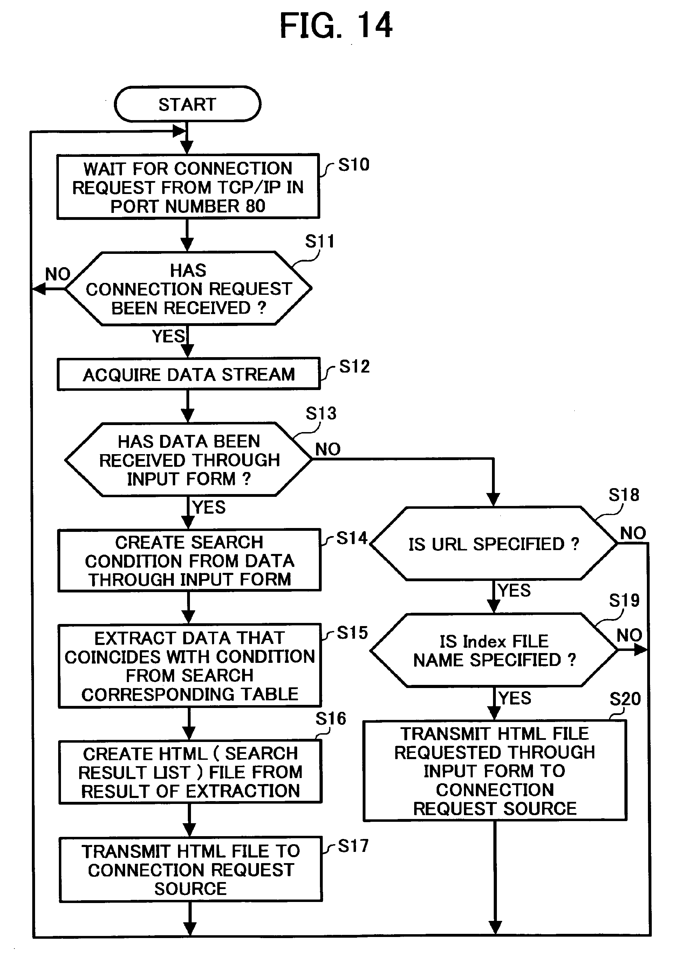

Fig. 14 is a flowchart for explaining the operation when the program for executing the Web search function in the MFP 1 receives the connection request from the TCP/IP. Based on the program, the CPU 31 waits for the connection request from the TCP/IP 53 in port number 80 (step S10). The port number 80 is specified when the Web browser issues the connection request. When the connection request has been received (step S11, Y), the data stream including the data received is checked (step S12). At this time, it is checked whether the input data has been received through the input fields 74 and 75 as shown in Fig. 11 (or whether the data has been input through the search-portal input form screen 73) (discriminating unit) (step S13). The discrimination is determined according to whether the data is added with the names of the input fields 74 and 75. For example, if a character stream of "tikuseki" and "image" is found, it is possible to learn whether the connection request has been issued from the input screen as shown in Fig. 11.

The case where the data is not through the search-portal input form screen 73 (step S13, No (N)) is explained below. When connection is requested not through the search-portal input form screen 73, it is checked whether it is a request of the HTML document of Fig. 12. Therefore, the URL is checked whether URL such as "http://133.139.160.94/index.html" is specified (steps S18 and S19). If the URL is specified (step S18, Y and step S19, Y), the HTML document of Fig. 12 is transmitted to the connection request source (step S20). If the URL is not specified or the content is inadequate (step S18, N and step S19, N), then no process is performed and the CPU 31 again waits for the connection request (steps S10 and S11).

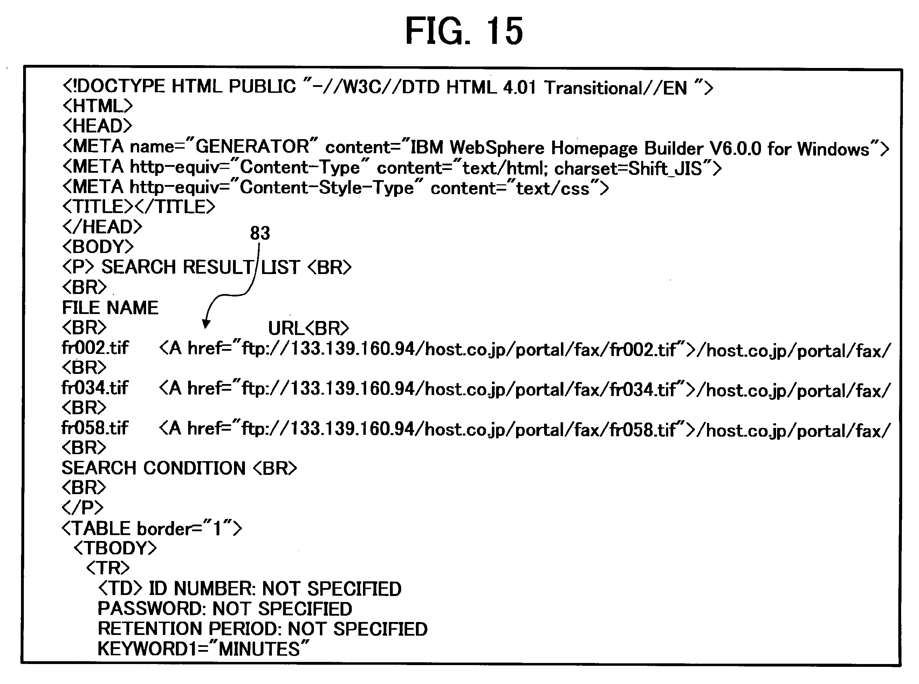

When it is found that the connection request has been received through the input form (step S13, Y), a search condition is created (step S14). Since the data having been input in the input fields 74 and 75 as shown in Fig. 13 is received from the connection request source, the search condition is specified from the content of the data received. When the search condition is specified, the content of the search corresponding table 80 is checked to extract data that coincides with the search condition (search unit) (step S15). Based on the result of extracting the data, a search result list (HTML document file) as shown in Fig. 15 is created (step S16). The search result list (HTML document file) is transmitted to the connection request source (search-result transmitting unit) (stepS17).

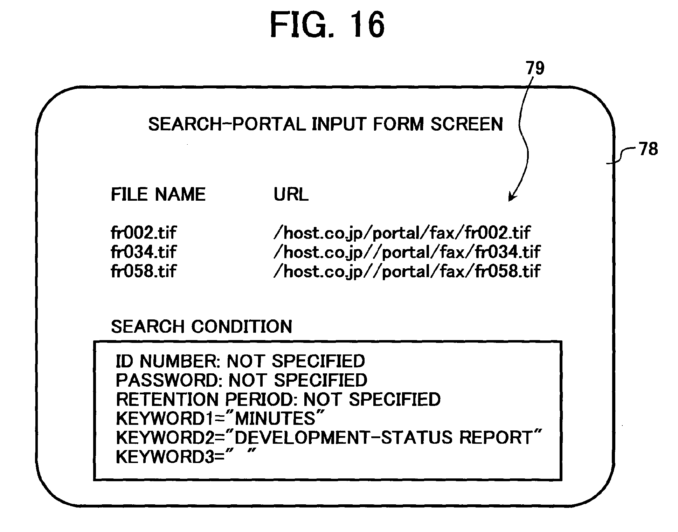

In the connection request source, the Web browser receives the search result list (HTML document file) and displays the content thereof. At this time, if the content is the example of the HTML document file of Fig. 15, a search result screen 78 of Fig. 16 is displayed in the Web browser screen of the connection request source. If a location (reference sign 79) displaying the URL that is information used to transfer the data file is selected in the search result screen 78 of Fig. 16 displayed, then a file transfer request is issued from the client computer 4 to corresponding URL. Whether a file transfer function is effective is determined whether the Web browser can support the file transfer function. If it is supported by the Web browser, the file transfer function can be executed. As indicated by reference sign 83 of Fig. 15, the definition of this part indicates a location where the file is stored in the monitor folder.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An information processing system connected to a network, comprising:
a memory that is accessible from other device on the network; and
a replicating unit (B) that makes a replica of a data file, which is to be shared with the other devices, in the memory.

2. The information processing system according to claim 1, further comprising a plurality of processing units (4) are that connected to each other through an inbuilt network and respectively execute different processing, each of the processing units (4) having a data file, wherein
the replicating unit (B) makes a replica of the data files of the processing units (4) in the memory.

3. The information processing system according to claim 1 or 2, wherein one or more data files are associated with a personal identification information,
the information processing system further comprises a personal identification information receiving unit,
wherein when a personal identification information is received by the receiving unit, the replicating unit (B) makes a replica of the data file associated with the personal identification information received.

4. The information processing system according to one of claims 1 to 3, further comprising a registering unit (34) that registers various search conditions of the data file to be replicated, into a table when the replication is to be performed.

5. The information processing system according to claim 4, wherein the registering unit (34) can register a first search condition, which are set by a user, and a second search condition, which are automatically set.

6. The information processing system according to claim 4 or 5, wherein
the registering unit (34) can register a retention period of the data file and the search condition of the relevant data file as one of the search conditions, and
the information processing system further comprises a deleting unit (35) that deletes the data file and the search condition when the retention period is over.

7. The information processing system according to one of claims 4 to 6, further comprising a search unit (31) that searches a search condition given from the table when the search of the data file is requested.

8. The information processing system according to one of claims 1 to 7, wherein the memory is controlled by a File Transfer Protocol server (3), and the data file in the memory can be transferred to the outside.

9. The information processing system according to claim 8, wherein the information processing system can be accessed through a Web browser from the outside of the information processing system.

10. The information processing system according to claim 9, further comprising a discriminating unit (31) that discriminates an access through input to a predetermined input form from an access not through input to the predetermined input form, out of the accesses.

11. The information processing system according to claim 9 or 10, further comprising a search-result transmitting unit (31) that edits a result of the search as a HyperText Markup Language document, and transmits the result to the Web browser.

12. The information processing system according to claim 11, wherein the search-result transmitting unit (31) adds information for transmitting the data file to the HyperText Markup Language document, the data file being related to the search condition searched in the table.

13. A computer program that causes an information processing system execute:
making a replica of a data file, which is to be shared with other devices that are connected to the information processing system via a network, in a memory that is accessible from the other device.

14. The computer program according to claim 13, wherein
the information processing system includes a plurality of processing units (4) that are connected to each other through an inbuilt network and respectively execute different processing, each of the processing units (4) having a data file, and
the making a replica includes making a replica of the data files of the processing units (4) in the memory.

15. The computer program according to claim 13 or 14, wherein
one or more data files are associated with a personal identification information,
the computer program further causing receiving a personal identification information, and
when a personal identification information is received at the receiving, the making a replica includes making a replica of the data file associated with the personal identification information received.

16. The computer program according to one of claims 13 to 15, further comprising registering various search conditions of the data file to be replicated, into a table when the replication is to be performed.

17. The computer program according to claim 16, wherein the registering includes registering a first search condition, which are set by a user, and a second search condition, which are automatically set.

18. The computer program according to claim 16 or 17, wherein
the registering includes setting a retention period as a search condition, and
the computer program further causing deleting the data file and the search condition when the retention period is over.

19. The computer program according to one of claims 16 to 18, further comprising searching a search condition given from the table when the search of the data file is requested.

20. The computer program according to one of claims 13 to 19, wherein the memory is controlled by a File Transfer Protocol server (3), and the data file in the memory can be transferred to the outside.

21. The computer program according to claim 20, wherein the information processing system can be accessed through a Web browser from the outside of the information processing system.

22. The computer program according to claim 21, further comprising discriminating an access through input to a predetermined input form from an access not through input to the predetermined input form, out of the accesses.

23. The computer program according to claim 21 or 22, further comprising editing a result of the search as a HyperText Markup Language document, and transmitting the result to the Web browser.

24. The computer program according to claim 23, wherein the editing includes adding information for transmitting the data file to the HyperText Markup Language document, the data file being related to the search condition searched in the table.

25. A computer-readable recording medium that stores the computer program according to one of claims 13 to 24.
